# EUROPÄISCHE PATENTSCHRIFT

(11) **EP 1 099 469 B1**
(45) Veröffentlichungstag und Bekanntmachung des Hinweises auf die Patenterteilung: **17.09.2003**
(21) Anmeldenummer: 00810938.1
(22) Anmeldetag: 11.10.2000
(51) Int. Cl.: B01F 5/06

(54) **Statischer Mischer mit Präzisionsguss-Elementen**
Static mixer with precision casting elements
Mélangeur statique avec elements par coulée de précision

(30) Priorität: 10.11.1999 EP 99811032
(43) Veröffentlichungstag der Anmeldung: 16.05.2001
(73) Patentinhaber: Sulzer Chemtech AG, 8404 Winterthur (CH)
(72) Erfinder: Maurer, Rudolf, 8404 Winterthur (CH); Studlek, Joachim, 35614 Asslar (DE)
(74) Vertreter: Sulzer Management AG

(56) Entgegenhaltungen:
- EP-A- 0 646 408

## Beschreibung

Die Erfindung betrifft einen statischen Mischer mit Präzisionsguss-Elementen gemäss Oberbegriff von Anspruch 1, ein Gusselement zu einem solchen Mischer und ein Verfahren zur Herstellung des Mischers sowie die Verwendung eines statischen Mischers.

Aus der EP-A-0 646 408 ist ein statischer Mischer bekannt, mit dem sich hochviskose Polymerschmelzen homogeniseren lassen. Dieser Mischer ist als Mischkopf in der Düse einer Spritzgussmaschine oder als Schmelzemischer im Anschluss an die Schnecke eines Extruders verwendbar. Er ist aus Gusselementen und Zwischenelementen zusammengesetzt und er hat eine zylindrische Form. Die Gusselemente enthalten Strukturen, beispielsweise Gitterstrukturen, die einen Mischvorgang in einer durchfliessenden Schmelze bewirken. Die in der EP-A 0 646 408 gezeigten Strukturen sind aus Lagen aufgebaut, die Kanäle enthalten und die parallel zu einer Zentralachse ausgerichtet sind. Bei einer bevorzugten Ausführungsform bilden die Zwischenelemente zusammen mit Teilen der Gusselemente, nämlich mit flanschartigen Verstärkungsringen, einen rohrförmigen Mantel, innerhalb dem eine Mehrzahl von Mischerstrukturen hintereinander angeordnet sind. In benachbarten Mischerstrukturen sind die Lagen jeweils um einen vorgegebenen Winkel, vorzugsweise um 90°, gegeneinander versetzt. Damit diese Versetzung beim Zusammenbau des statischen Mischers zuverlässig hergestellt wird, sind an den Verstärkungsringen Nocken angeformt und an den Zwischenelementen in einer zu den Nocken komplementären Weise Aussparungen eingelassen. Bei einem korrekten Zusammenbau fügen sich die Nocken in die entsprechenden Aussparungen ein und sorgen so für eine vorgegebene Ausrichtung der Elemente.

Die Gusselemente lassen sich mittels Präzisionsguss bis auf Toleranzen von 0,1 mm herstellen. Für den Einsatz in Spritzgussmaschinen ist diese Toleranz ungenügend. Es ist in solchen Maschinen aus Dichtheitsgründen eine präzis einzuhaltende Gesamtlänge des statischen Mischers erforderlich.

Aufgabe der Erfindung ist es, den statischen Mischer der genannten Ausführungsform so weiterzubilden, dass eine vorgegebene Gesamtlänge des Mischers, wie sie beispielsweise in Spritzgussmaschinen erforderlich ist, präzis herstellbar ist. Diese Aufgabe wird durch den im Anspruch 1 definierten statischen Mischer gelöst.

Der statische Mischer enthält Präzisionsguss-Elemente, die entlang einer Zentralachse angeordnet sind und die an ihrem Umfang jeweils einen über den ganzen Umfang sich erstreckenden Verstärkungsbereich aufweisen. Diese Gusselemente sind mit Zwischenelementen zu einem zylindrischen Körper zusammengesetzt. Stossstellen zwischen den Elementen bilden Flächen, die quer zur Zentralachse stehen. Für jedes isolierte Gusselement sind bei einem Rotieren um dessen Zentralachse die Stossstellen zu einer Nachbearbeitung für Bearbeitungswerkzeuge zugänglich - insbesondere zu einem Abschleifen oder Abdrehen. Aufgrund der Nachbearbeitung lässt sich eine vorgegebene Gesamtlänge des Mischers in Richtung der Zentralachse präzis ausbilden.

Bei den bekannten Gusselementen wird eine notwendige Nachbearbeitung wegen den Nocken an den Verstärkungsringen verunmöglicht. Bei den Zwischenelementen ist eine Nachbearbeitung nicht erforderlich, da diese sich aus einem Rohr durch spanbildende Verfahren in eine vorgegebene Form bringen lassen, wobei die notwendige Präzision herstellbar ist.

Die abhängigen Ansprüche 2 bis 4 betreffen vorteilhafte Ausführungsformen des erfindungsgemässen Mischers. Das Gusselement dieses Mischers ist jeweils Gegenstand der Ansprüche 5 bis 8. Anspruch 9 bezieht sich auf ein Verfahren zur Herstellung des erfindungsgemässen Mischers und Anspruch 10 betrifft Verwendungen des Mischers.

Nachfolgend wird die Erfindung anhand der Zeichnungen erläutert. Es zeigen:
- Fig. 1: eine erste Ausführungsform des erfindungsgemässen Gusselements, das einen Verstärkungsring aufweist,
- Fig. 2: ein Ende eines zum Gusselement der Fig. 1 passenden Zwischenelements,
- Fig. 3: einen abgewickelten Umfang des genannten Verstärkungsrings und eine entsprechende Abwicklung des Zwischenelements,
- Fig. 4: ein Schrägbild, das ausschnittsweise einen erfindungsgemässen Mischers darstellt,
- Fig. 5: einen Längschnitt durch eine Düse, die einen Mischkopf enthält,
- Fig. 6: eine perspektivische Darstellung des Endbereichs der ersten Ausführungsform des erfindungsgemässen Mischers,
- Fig. 7, 8: Abwicklungen wie in Fig. 3 für eine zweite bzw. dritte Ausführungsform und
- Fig. 9, 10: Abwicklungen der Verstärkungsringe von zwei weiteren Ausführungsformen.

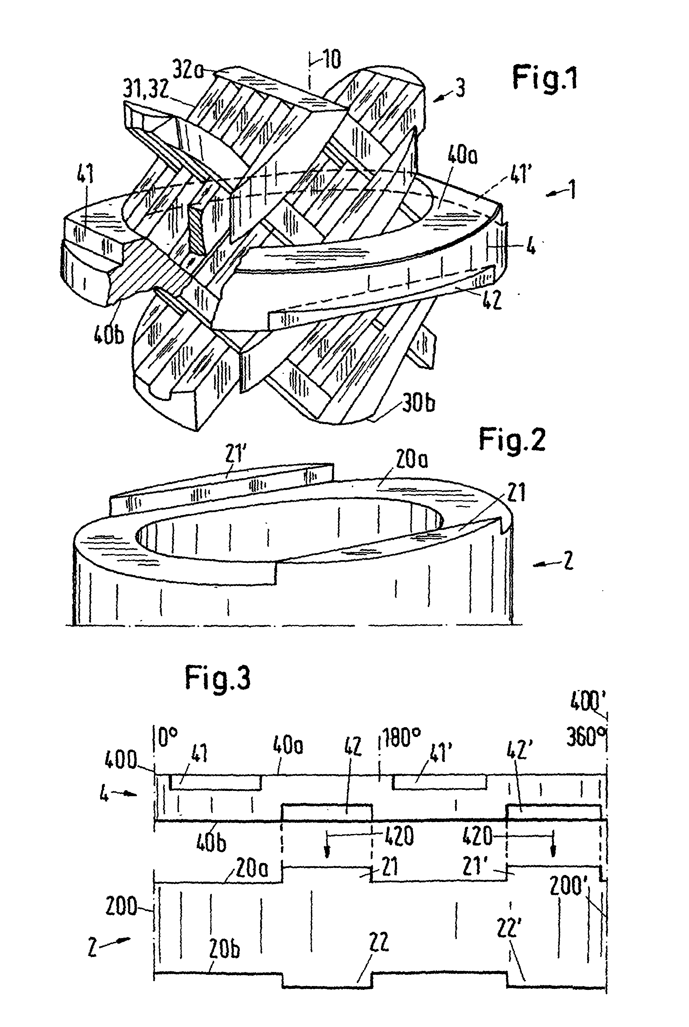

Ein Gusselement 1 gemäss Fig. 1 lässt sich durch einen Präzisionsguss herstellen, bei dem eine Gussform mittels einem Wachskörper, Aufbringen einer keramischen Hülle auf den Wachskörper, anschliessendes Entfernen des Wachses und Brennen der keramischen Hülle gebildet wird. Für die Passgenauigkeit, die erreichbar ist, ergibt sich durch dieses Gussverfahren eine Toleranz von rund 0,1 mm. Das Gusselement 1 wird in der Regel aus einer metallischen Legierung gegossen. Mit anderen Gussverfahren können auch Gusselemente 1 aus keramischem Material oder Kunststoff hergestellt werden. Ein Gitterwerk 3 - nämlich die Mischerstruktur 3 - und ein Verstärkungsring 4 bilden das Gusselement 1 in Form eines monolithischen Körpers. Das Gitterwerk 3 setzt sich aus in Lagen 32 angeordneten Stegen 31 zusammen. Die Lagen 32 sind parallel zu einer Zentralachse 10 orientiert. Die Stege 31 benachbarter Lagen 32 kreuzen sich und schliessen bezüglich der Richtung der Zentralachse 10 einen einheitlichen Winkel von 45° ein. Dieser Winkel kann auch einen Wert zwischen 10 und 70° haben. Der flanschartige Ring 4 ist ein Verstärkungsbereich, der sich über den ganzen Umfang des Gusselements 1 erstreckt.

Der statische Mischer ist aus einer Mehrzahl von Gusselementen 1 und Zwischenelementen 2, siehe Fig. 2, zusammengesetzt, die entlang der Zentralachse 10 angeordnet sind und die so einen zylindrischen Körper bilden. Die Mischerstrukturen 3 werden so ausgebildet, dass im zusammengebauten Mischer die Enden 30a und 30b benachbarter Gusselemente 1 sich nicht berühren. Die Elemente 1 und 2 stehen an Stossstellen in Kontakt, die durch ringförmige Flächen 40a, 40b des Verstärkungsringes 4 und ringförmige Flächen 20a, 20b (siehe Fig. 3) des Zwischenelements 2 gebildet sind. Diese Flächen 40a, 40b und 20a, 20b bilden die einzigen Stossstellen. In Fig. 3 sind ein abgewickelter Umfang des Verstärkungsrings 4 und eine entsprechende Abwicklung des Zwischenelements 2 dargestellt. Pfeile 420 deuten an, wie der Ring 4 auf das Zwischenelement 2 aufsetzbar ist. Die seitlichen Linien 400 und .400'bzw.'200 und 200' sind Schnittlinien, an denen jeweils der Umfang sich schliesst (Winkel 0° und 360°).

Der Verstärkungsring 4 weist an der Fläche 40a segmentförmige Ausnehmungen 41, 41' und an der Fläche 40b gleich geformte Ausnehmungen 42, 42' auf, die komplementär zu vorstehenden Teilen 21, 21' bzw. 22, 22' des Zwischenelements 2 sind. Die Ausnehmungen 41, 41', 42, 42' bilden zwei Paare, wobei die Ausnehmungen der Paare 41, 41' bzw. 42, 42' jeweils diametral zueinander angeordnet sind und die beiden Paare um 90° gegeneinander versetzt angeordnet sind. Die entsprechenden Erhebungen 21, 21', 22, 22' des Zwischenelements 2 sind so angeordnet, dass jeweils zwei der Erhebungen 21 und 22 bzw. 21' und 22' in Richtung der Zentralachse 10 fluchtend hintereinander folgen. Durch diese Anordnungen ergibt sich eine Versetzung der Gitterstrukturen 3 zwischen zwei benachbarten Gusselementen 1 um 90°.

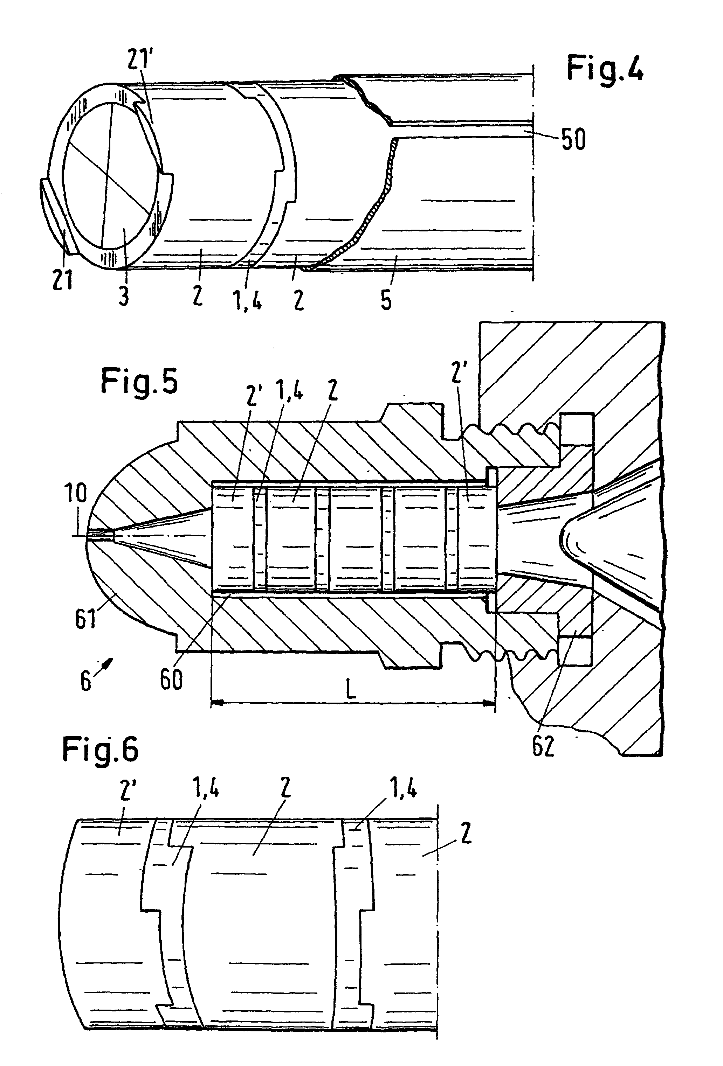

Das Schrägbild in Fig. 4 zeigt einen Ausschnitt aus einem erfindungsgemässen Mischer. Die Mischerstruktur 3 ist mit zwei sich kreuzenden Durchmessern angedeutet. Die Gusselemente 1 und Zwischenelemente 2 können durch einen längsgeschlitzten Zylinder 5 (Schlitz 50) aus einem federelastischen Blech zusammengehalten sein.

Die Stossstellen zwischen den Elementen 1 und 2 stehen quer zur Zentralachse 10. Die durch Flächen 40a, 40b des Gusselements 1 gegebenen Stossstellen sind zu einer Nachbearbeitung für Bearbeitungswerkzeuge zugänglich, wenn das isolierte Gusselement um seine Zentralachse 10 rotiert wird. Es kann mittels Abschleifens oder Abdrehens nachbearbeitet werden. Aufgrund der Nachbearbeitung kann eine vorgegebene Gesamtlänge L des Mischers in Richtung der Zentralachse 10 präzis ausgebildet werden, so dass der Mischer beispielsweise in eine Düse 6, wie in Fig. 5 abgebildet, exakt hineinpasst. Der Mischer ist in einem Hohlraum 60 einer Düsenkapsel 61 unter Anpressen mit einem Bauteil 62 dicht eingesetzt.

An den Enden hat der Mischer anstelle von Zwischenstücken 2 geeignet abgewandelte Endstücke 2'. Fig. 6 illustriert mit einer perspektivischen Darstellung den Mischerendbereich mit dem Endstück 2'.

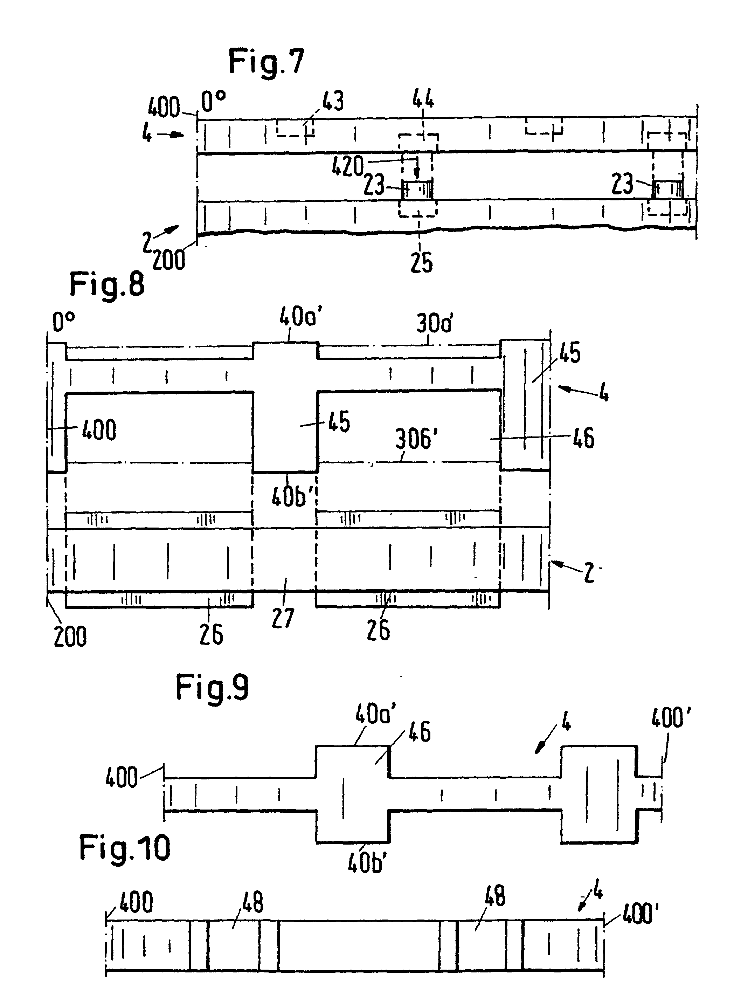

Ausser der oben beschriebenen ersten Ausführungsform sind weitere Möglichkeiten zur Realisierung des erfindungsgemässen Mischers denkbar. Einzelne der vorstehenden Teile der Zwischenelemente 2 können separate Teile sein, die in Ausnehmungen des Zwischenelements 2 eingefügt sind. Ein Beispiel ist in Fig. 7 gezeigt. Ausnehmungen 43 und 44 im Verstärkungsring 4 sind als kreisförmige Sacklöcher ausgebildet. Entsprechende Erhebungen 23 des-Zwischenelements 2 sind zylindrische Bolzen 23, die in Ausnehmungen 25 eingefügt sind. Pro Stossstelle kann auch jeweils nur ein Bolzen 23 mit entsprechenden Ausnehmungen 25 und 44 oder 43 vorgesehen sein.

Bei dem in Fig. 8 gezeigten Ausführungsbeispiel ist der Verstärkungsbereich 4 ein Ring, der durch zwei den Ring 4 kreuzende Stege 45 erweitert ist. Der Verstärkungsbereich 4 hat überall die gleiche Dicke, die auch für zwei Wandstücke 26 des Zwischenelements 2 vorgesehen ist. Diese Wandstücke 26 füllen die Lücken zwischen den Stegen 45 aus, wobei ein gewisses Spiel vorgesehen ist. Sie bilden gleichzeitig eine Verzahnung zwischen benachbarten Gussstücken 1 aus. Die Wandstücke 26 sind über einen Blechring 27 miteinander verbunden und bilden so das Zwischenelement 2. Durch die strichpunktierten Linien 30a' und 30b' sind die Lagen der beiden Ende 30a und 30b der Mischerstruktur 3 angegeben. Im zusammengesetzten Mischer bilden die Flächen 40a' und 40b' eine Stossstelle zwischen benachbarten Gusselementen 1. Es liegen keine längenbestimmenden Stossstellen zwischen den Gusselementen 1 und Zwischenelementen 2 vor. Bei diesem Ausführungsbeispiel wird die winkelartige Versetzung benachbarter Mischerstrukturen 3 nicht durch die Verstärkung 4 bewirkt. Es müssen daher zwei verschiedene Gusselemente 1 vorgesehen sein, die sich durch eine unterschiedliche Orientierung der Mischerstrukturen 3 gegenüber der Anordnung der Stege 45 unterscheiden.

Beim Ausführungsbeispiel gemäss Fig. 9 ist das Zwischenelement 2 (nicht dargestellt) ähnlich wie beim ersten Ausführungsbeispiel ausgebildet. Stosststellen sind wieder durch Flächen 40a' und 40b' des Verstärkungsbereichs 4 und entsprechende Flächen des Zwischenelements 2 gebildet.

Beim Ausführungsbeispiel gemäss Fig. 10 ist der Verstärkungsbereich 4 wieder ringförmig und Ausnehmungen sind durch trapezförmige Nuten 48 gebildet.

## Patentansprüche

1. Statischer Mischer mit Präzisibnsguss-Elementen (1), die entlang einer Zentralachse (10) angeordnet sind und die an ihrem Umfang jeweils einen über den ganzen Umfang sich erstreckenden Verstärkungsbereich (4) aufweisen, wobei diese Gusselemente (1) mit Zwischenelementen (2) zu einem zylindrischen Körper zusammengesetzt sind und wobei Stossstellen zwischen den Elementen (1, 2) Flächen (40a, 40b, 20a, 20b) bilden, die quer zur Zentralachse stehen, **dadurch gekennzeichnet, dass** für jedes isolierte Gusselement bei einem Rotieren um dessen Zentralachse die Stossstellen zu einer Nachbearbeitung für Bearbeitungswerkzeuge zugänglich sind - insbesondere zu einem Abschleifen oder Abdrehen - und dass aufgrund der Nachbearbeitung eine vorgegebene Gesamtlänge (L) des Mischers in Richtung der Zentralachse präzis ausgebildet ist.

2. Statischer Mischer nach Anspruch 1, **dadurch gekennzeichnet, dass** die Verstärkungsbereiche (4) der Gusselemente (1) jeweils ringförmig sind und jeder dieser Ringe Ausnehmungen (41, 41', 42, 42') aufweist, die komplementär zu vorstehenden Teilen (21, 21', 22, 22'; 23) der Zwischenelemente (2) sind.

3. Statischer Mischer nach Anspruch 2, **dadurch gekennzeichnet, dass** zumindest einzelne der vorstehenden Teile (23) der Zwischenelemente (2) separate Teile sind, die in Ausnehmungen (25) der Zwischenelemente eingefügt sind.

4. Statischer Mischer nach einem der Ansprüche 1 bis 3, **dadurch gekennzeichnet, dass** alle Elemente (1, 2, 2') durch einen längsgeschlitzten Zylinder (5) aus einem federelastischen Blech zusammengehalten sind.

5. Gusselement zu einem statischen Mischer gemäss einem der Ansprüche 1 bis 4, **dadurch gekennzeichnet, dass** es durch ein Präzisionsguss- oder Spritzgussverfahren hergestellt ist und ein Gitterwerk (3) von in Lagen angeordneten Stegen (31) umfasst, wobei die Lagen parallel zur Zentralachse (10) orientiert sind, die Stege benachbarter Lagen sich kreuzen und bezüglich der Richtung der Zentralachse Winkel zwischen 10 und 70°, vorzugsweise einen einheitlichen Winkel von rund 45° einschliessen.

6. Gusselement nach Anspruch 5, **dadurch gekennzeichnet, dass** es aus einer metallischen Legierung, aus keramischem Material oder aus Kunststoff hergestellt ist.

7. Gusselement nach Anspruch 5 oder 6, **dadurch gekennzeichnet, dass** das Gitterwerk (3) der Stege (31) von einem flanschartigen, mitgegossenen Ring (4) verstärkt ist, der zwei ringförmige, quer zur Zentralachse (10) liegende und als Stossstellen zu Zwischenelementen (2) vorgesehene Oberflächen (40a, 40b) aufweist.

8. Gusselement nach Anspruch 7, **dadurch gekennzeichnet, dass** am äusseren Rand des Rings (4) zwei Paare segmentförmige Ausnehmungen (41, 41', 42, 42') vorgesehen sind, wobei die Ausnehmungen eines Paars jeweils diametral zueinander angeordnet sind und die beiden Paare um 90° gegeneinander versetzt angeordnet sind.

9. Verfahren zur Herstellung eines statischen Mischers gemäss einem der Ansprüche 1 bis 4, **dadurch gekennzeichnet, dass** Gusselemente (1) durch ein Präzisionsguss- oder Spritzgussverfahren hergestellt werden, dass Zwischenelemente (2) aus einem Rohr durch spanbildende Verfahren in eine vorgegebene Form gebracht werden und dass Stossstellen (40a, 40b) der Gusselemente so nachbearbeitet werden, dass der aus den Elementen (1, 2) zusammengesetzte Mischer eine vorgeschriebene Gesamtlänge (L) präzis annimmt.

10. Verwendung eines statischen Mischers gemäss einem der Ansprüche 1 bis 4 in Spritzgussmaschinen oder Extrusionsanlagen, insbesondere in der Düse (6) einer Spritzgussmaschine, in einem Heisskanal oder Verteilersystem einer Spritzwerkgruppe, in einem -Verteilersystemen vor Werkzeugen einer Blasformanlage oder im Anschluss an die Schnecke eines Extruders.

## Claims

1. Static mixer comprising precision cast elements (1) which are arranged along a central axis (10) and which in each case have a reinforcement region (4) at their periphery which extends over the entire periphery, wherein these cast elements (1) are assembled with intermediate elements (2) to form a cylindrical body, and wherein joint locations between the elements (1, 2) form surfaces (40a, 40b, 20a, 20b) which stand transversely to the central axis, **characterized in that**
for each isolated cast element, in a rotation about its central axis the joint locations are accessible to machining tools for a subsequent machining ―in particular for a grinding or turning operation; and **in that** as a result of the subsequent machining a predetermined total length (L) of the mixer in the direction of the central axis is precisely achieved.

2. Static mixer in accordance with claim 1, **characterized in that** the reinforcement regions (4) of the cast elements (1) are in each case ring-shaped and each of these rings has cut-outs (41, 41', 42, 42') which are complementary to projecting parts (21, 21', 22, 22'; 23) of the intermediate elements (2).

3. Static mixer in accordance with claim 2, **characterized in that** at least some of the projecting parts (23) of the intermediate elements (2) are separate parts which are fitted into cut-outs (25) of the intermediate elements.

4. Static mixer in accordance with any one of the claims 1 to 3, **characterized in that** all elements (1, 2, 2,) are held together by a longitudinally slit cylinder (5) of a resiliently elastic sheet metal.

5. Cast element for a static mixer in accordance with any one of the claims 1 to 4, **characterized in that** it is manufactured by a precision casting method or an injection molding method and comprises a gridwork (3) of webs (31) which are arranged in layers, with the layers being oriented parallel to the central axis (10), and with the webs of adjacent layers crossing one another and enclosing angles between 10 and 70°, preferably a uniform angle of about 45°, with respect to the direction of the central axis.

6. Cast element in accordance with claim 5, **characterized in that** it is manufactured of a metallic alloy, of ceramic material or of plastic.

7. Cast element in accordance with claim 5 or claim 6, **characterized in that** the gridwork (3) of the webs (31) is reinforced by a flange-like, co-cast ring (4) which has two ring-shaped surfaces (40a, 40b) which tie transversely to the central axis (10) and which are provided as joint locations to intermediate elements (2).

8. Cast element in accordance claim 7, **characterized in that** two pairs of segment-like cut-outs (41, 41', 42, 42,) are provided at the outer edge of the ring (4), with the cut-outs of a pair in each case being arranged diametrically opposite to one another and with the two pairs being displaced by 90° with respect to one another.

9. Method for manufacturing a static mixer in accordance with any one of the claims 1 to 4, **characterized in that** cast elements (1) are manufactured by a precision casting or injection molding method; **in that** intermediate elements (2) are brought into a predetermined shape from a tube by a chip-forming machining process; and **in that** joint locations (40a, 40b) of the cast elements are subsequently machined in such a manner that the mixer which is assembled from the elements (1, 2) precisely assumes a prescribed total length (L).

10. Use of a static mixer in accordance with any one of the claims 1 to 4 in injection molding machines or extrusion plants, in particular in the nozzle (6) of an injection moldingmachine, in a hot passage or distributor system of an injection molding group, in a distributor system ahead of tools of a blow-molding plant or following the screw of an extruder.

## Revendications

1. Mélangeur statique avec des éléments obtenus par coulée de précision (1), qui sont disposés le long d'un axe central (10) et qui présentent chacun sur leur périphérie une zone de renfort (4) s'étendant sur toute la périphérie, ces éléments coulés (1) étant montés avec des éléments intermédiaires (2) pour former un corps cylindrique et moyennant quoi des points d'appui constituent entre les éléments (1, 2) des surfaces (40a, 40b, 20a, 20b) qui sont transversales par rapport à l'axe central, **caractérisé en ce que**, pour chaque élément coudé isolé, lors d'une rotation autour de son axe central, les points d'appui sont accessibles pour une reprise pour des outils d'usinage, en particulier pour un enlèvement par meulage ou au tour, et **en ce que**, compte tenu de la reprise, une longueur totale (L) prédéfinie du mélangeur en direction de l'axe central est réalisée de façon précise.

2. Mélangeur statique selon la revendication 1, **caractérisé en ce que** les zones de renfort (4) des éléments coulés (1) sont respectivement de forme annulaire et chacune de ces bagues présente des évidements (41, 41', 42, 42'), qui sont complémentaires des parties saillantes (21, 21', 22, 22'; 23) des éléments intermédiaires (2).

3. Mélangeur statique selon la revendication 2, **caractérisé en ce qu'**au moins certaines des parties (23) saillantes des éléments intermédiaires (2) sont des parties séparées, qui sont insérées dans dés évidements (25) des éléments intermédiaires.

4. Mélangeur statique selon l'une quelconque des revendications 1 à 3, **caractérisé en ce que** tous les éléments (1, 2, 2') sont maintenus ensemble par un cylindre (5) fendu dans le sens de la longueur et à base d'une tôle élastique à la façon d'un ressort.

5. Élément coulé pour un mélangeur statique selon l'une quelconque des revendications 1 à 4, **caractérisé en ce qu'**il est fabriqué par un procédé de moulage de précision ou un procédé de moulage par injection et comprend un réseau réticulaire (3) de barrettes (31) disposées en couches, les couches étant orientées parallèlement à l'axe central (10), les barrettes de couches voisines se croisant et formant par rapport à la direction de l'axe central des angles compris entre 10 et 70°, de préférence un angle homogène d'environ 45°.

6. Élément coulé selon la revendication 5, **caractérisé en ce qu'**il est fabriqué à base d'un alliage métallique, à base de matériau céramique ou à base de plastique.

7. Élément coulé selon la revendication 5 ou 6, **caractérisé en ce que** le réseau réticulaire (3) des barrettes (31) est renforcé par une bague (4) du type bride et venue de fonte, qui présente deux surfaces (40a, 40b) de forme annulaire disposées transversalement par rapport à l'axe central (10) et prévues comme points d'appui pour des éléments intermédiaires (2).

8. Élément coulé selon la revendication 7, **caractérisé en ce que** deux paires d'évidements (41, 41', 42, 42') en forme de segments sont prévues sur le bord extérieur de la bague (4), les évidements de chaque paire étant disposés de façon diamétralement opposée et les deux paires étant disposées avec un déport de 90° l'une par rapport à l'autre.

9. Procédé pour fabriquer un mélangeur statique selon l'une quelconque des revendications 1 à 4, **caractérisé en ce que** des éléments coulés (1) sont fabriqués par un procédé de moulage de précision ou un procédé de moulage par injection, **en ce que** des éléments intermédiaires (2) à base d'un tuyau sont amenés par des procédés formant des copeaux dans une forme prédéfinie et **en ce que** des points d'appui (40a, 40b) des éléments coulés sont repris de sorte que le mélangeur composé des éléments (1, 2) prend de façon précise la longueur totale (L) prescrite.

10. Utilisation d'un mélangeur statique selon l'une quelconque des revendications 1 à 4 dans des machines de moulage par injection ou des installations d'extrusion, en particulier dans la buse (6) d'une machine de moulage par injection, dans un canal chaud ou un système de distribution d'un groupe d'injection, dans un système de distribution avant les outils d'une installation de moulage par soufflage ou à la suite de la vis sans fin d'une extrudeuse.
